# EUROPÄISCHE PATENTSCHRIFT

(11) **EP 4 303 100 B1**
(45) Veröffentlichungstag und Bekanntmachung des Hinweises auf die Patenterteilung: **11.02.2026**
(21) Anmeldenummer: 23176297.2
(22) Anmeldetag: 31.05.2023
(51) Int. Cl.: B62D 15/02, B60W 40/06, B60W 40/09

(54) **VERFAHREN UND VORRICHTUNG ZUR HANDERKENNUNG AN EINEM LENKRAD EINES FAHRZEUGES**
METHOD AND DEVICE FOR IDENTIFYING THE HAND OF A STEERING WHEEL OF A VEHICLE
PROCÉDÉ ET DISPOSITIF DE RECONNAISSANCE DE LA MAIN SUR LE VOLANT D'UN VÉHICULE

(30) Priorität: 28.06.2022 DE 102022206519
(43) Veröffentlichungstag der Anmeldung: 10.01.2024
(73) Patentinhaber: VOLKSWAGEN AG, 38440 Wolfsburg (DE)
(72) Erfinder: Strehlow, Thomas, 38102 Braunschweig (DE); Makkus, Björn, 38108 Braunschweig (DE)

(56) Entgegenhaltungen:
- DE-A1- 102011 122 394
- DE-A1- 102013 021 269
- DE-A1- 102014 004 077
- US-A1- 2005 125 153
- US-A1- 2013 173 085

## Beschreibung

Die vorliegende Erfindung betrifft ein Verfahren und eine Vorrichtung zur Handerkennung an einem Lenkrad eines Fahrzeuges nach den unabhängigen Ansprüchen.

Verfahren zur Erkennung einer Hand an einem Lenkrad eines Fahrzeuges sind aus dem Stand der Technik grundsätzlich bekannt. So beschreibt beispielsweise die US 2010/0228417 A1 ein entsprechendes Verfahren, bei dem ein Vibrationssignal im Lenkrad ausgelöst wird, wobei festgestellt wird, dass der Fahrer das Lenkrad nicht hält, falls die Vibrationen detektiert werden. Eine solche Hands-On-Erkennung kann bei Fahrbahnanregungen im schlimmsten Fall allerdings aktiviert werden, obwohl der Fahrer das Lenkrad nicht anfasst (falsch positive Erkennung). Um dies auszuschließen, sind im Stand der Technik kostenintensive zusätzliche, kostenintensive Komponenten notwendig, wie beispielsweise eine Kamera zur Erkennung des Fahrers und seines Zustandes oder ein kapazitives Lenkrad.

Aus der DE 10 2014 004 077 A1 bekannt ist ein gattungsgemäßes Verfahren zum Erfassen eines Bedienzustandes eines Lenkrades eines Fahrzeuges, wobei zumindest eine Hand eines Fahrers des Fahrzeuges in einem ersten Bedienzustand an dem Lenkrad angeordnet ist und in einem zweiten Bedienzustand keine Hand des Fahrers an dem Lenkrad angeordnet ist, wobei bei erfasstem zweiten Bedienzustand ein Warnhinweis an den Fahrer ausgegeben wird. Hierbei wird mittels erfasster Signale zumindest eines am Fahrzeug angeordneten Inertialsensors und/oder mittels erfasster Signale eines am Fahrzeug angeordneten Lenkradwinkelsensors und/oder mittels erfasster Signale von am Fahrzeug angeordneten Raddrehzahlsensoren plausibilisiert, ob eine erfasste Lenkbewegung im ersten Bedienzustand oder im zweiten Bedienzustand ausgeführt wurde.

Aus der DE 10 2011 122 394 A1 bekannt ist ein Verfahren zum Erkennen einer Unaufmerksamkeit eines Fahrzeugführers eines Fahrzeuges, wobei die Unaufmerksamkeit in Abhängigkeit von einer erkannten Lenkruhephase und einer anschließend erkannten Lenkaktion bestimmt wird. Dabei wird durch eine Auswertung einer Raddrehzahl zumindest eines Fahrzeugrades des Fahrzeuges über einen vorgegebenen Zeitraum ein Fahrbahnzustand einer vom Fahrzeug befahrenen Fahrbahn ermittelt, wobei bei einem als schlecht eingestuften Fahrbahnzustand der ermittelte Lenkradwinkel nicht berücksichtigt wird.:
Aus der DE 10 2013 021 269 A1 bekannt ist ein Verfahren zur Ermittlung eines Fahrbahnzustandes einer Fahrbahn durch eine Erfassung und Auswertung von Raddrehzahlen wenigstens eines Rades eines die Fahrbahn befahrenden Fahrzeugs.

Aus der US 2013/0173085 A1 bekannt ist ein Verfahren zum Erkennen eines Mangels an Fahreraktivität am Lenkrad eines Kraftfahrzeugs. Ein vom Fahrer mit der Hand auf das Lenkrad ausgeübtes Moment wird wiederholt gemessen, und wenn in mehreren aufeinanderfolgenden Messungen die Größe eines Wertes des von der Hand ausgeübten Moments einen Schwellenwert nicht überschreitet, wird auf eine fehlende Fahreraktivität geschlossen. Die Größe des Schwellenwerts ist abhängig von der Oberflächenbeschaffenheit, insbesondere vom Grad der Unebenheit, der Fahrbahn, auf der gefahren wird. Der Grad der Unebenheit der Fahrbahn kann aus einer gemessenen vertikalen Beschleunigung in der Radaufhängung des Fahrzeugs oder aus Verzögerungs- und/oder Beschleunigungssignalen von mindestens einem Rad des Fahrzeugs abgeleitet werden.

Aus der US 2005/0125153 A1 bekannt ist eine Vorrichtung zur Verhinderung von Spurabweichungen bei Kraftfahrzeugen umfassend eine Steuereinheit, die erfasst, ob sich ein Fahrzeug in einem bestimmten Zustand befindet, in dem das Fahrzeug auf Fahrbahnunebenheiten, die sich auf oder nahe einer Fahrbahnmarkierungslinie befinden, fährt.

Der vorliegenden Erfindung liegt die Aufgabe zugrunde, eine falsch positive Handerkennung an einem Lenkrad auf effektive und kostengünstige Art und Weise zu verhindern.

Gelöst wird die oben genannte Aufgabe durch ein Verfahren zur Handerkennung an einem Lenkrad eines Fahrzeuges, wobei mittels eines Handmomentsensors ein erstes Signal zur Handerkennung ermittelt wird. Bei dem ersten Signal handelt es sich um das Handmoment, der mittels des Handmomentsensors festgestellt wird. Insbesondere wird eine lenkmomentbasierte Hands-On-Detektion durchgeführt.

Erfindungsgemäß wird ein zweites Signal hinsichtlich einer Radgeschwindigkeit mindestens eines Rades des Fahrzeuges mittels eines Drehzahlsensors ermittelt, um das erste Signal zu validieren. Bei dem zweiten Signal handelt es sich vor allem um die Drehzahl. Insbesondere werden die Radgeschwindigkeiten aller Räder des Fahrzeuges ermittelt, um das erste Signal zu validieren. Die Validierung dient dazu, eine falsch positive Hands-on-Erkennung, die aus einer Fahrbahnanregung resultiert, auszuschließen. Insbesondere umfasst das Verfahren die Validierung des ersten Signals basierend auf dem zweiten Signal. Fahrbahnanregungen basieren insbesondere auf Unebenheiten auf dem Fahrbahnuntergrund, beispielsweise durch Brücken, Fugen oder durch Schlaglöcher. Diese beeinflussen die Radgeschwindigkeiten. So ist es möglich, das erste Signal hinsichtlich des Handmomentes zu validieren. Auf kostenintensive Lösungen zur Vermeidung von falsch positiven Hands-On-Erkennungen kann verzichtet werden kann. Insbesondere wird eine bereits im Fahrzeug vorhandene Sensorik verwendet, sodass die falsch positiv Fehlrate ohne finanziellen Mehraufwand erreicht werden kann.

Insbesondere werden das erste Signal und das zweite Signal kontinuierlich überwacht. Bevorzugterweise wird das zweite Signal hinsichtlich dessen Frequenz und/oder dessen Amplitude analysiert. Erfindungsgemäß wird das zweite Signal mit zuvor definierten Schwellwerten hinsichtlich der Amplitude und/oder der Frequenz verglichen. Insbesondere wird die Amplitude des zweiten Signals in zuvor definierten Frequenzbereichen analysiert. Vor allem wird das zweite Signal hierzu spektral analysiert. Beispielsweise kann ein erster Frequenzbereich festgelegt werden, in dem typischerweise Fahrbahnanregungen liegen. Der Schwellwert kann beispielsweise 20 % über einer mittleren Amplitude des zweiten Signals liegen.

Erfindungsgemäß wird bei Überschreiten eines zuvor definierten Schwellwertes ein Vorliegen einer fahrbahninduzierten Störung des ersten Signals festgestellt. In anderen Worten wird festgestellt, dass die Fahrbahn derart uneben ist, dass das erste Signal einer Störung unterliegt und eine falsch positive Handerkennung vorliegen könnte. Die fahrbahninduzierte Störung kann beispielsweise durch Fahrbahnunebenheiten wie Schlaglöcher ausgelöst werden.

Werden die Radgeschwindigkeiten aller Räder des Fahrzeuges ermittelt, wird hinsichtlich jedes Rades ein zweites Signal ermittelt. Es kann eine Störung dann festgestellt werden, wenn jedes zweite Signal einen zuvor definierten Schwellwert überschreitet.

Das Vorliegen der fahrbahninduzierten Störung wird erfindungsgemäß durch eine Analyse des Lenkwinkels validiert, bevor weitere Schritte eingeleitet werden. Hierzu wird insbesondere der Lenkwinkel des Fahrzeuges überwacht, insbesondere ebenfalls kontinuierlich. Der Lenkwinkel sollte sich beim tatsächlichen Vorliegen einer fahrbahninduzierten Störung aufgrund einer Fahrbahnanregung ebenfalls gleichzeitig zumindest kurzfristig geändert haben. Dies ist ein Indiz dafür, dass tatsächlich eine fahrbahninduzierte Störung vorliegt. Insbesondere kann das Verfahren vorsehen, erst nach einer positiven Validierung mittels des Lenkwinkels das Vorliegen einer fahrbahninduzierten Störung trotz Überschreiten eines zuvor definierten Schwellwertes bezüglich des zweiten Signals festzustellen.

Beim Feststellen einer fahrbahninduzierten Störung kann ein zuvor definierter Schwellwert bezüglich des ersten Signals zur Erkennung einer Hands-Off-Situation erhöht werden. Das erste Signal wird vor allem auch hinsichtlich dessen Amplitude und/oder Frequenz analysiert. Insbesondere wird zuvor mindestens ein Schwellwert bezüglich des ersten Signals definiert. Liegt das erste Signal unterhalb des Schwellwertes, wird eine Hands-Off-Situation erkannt, während, falls das erste Signal oberhalb des mindestens einen zuvor definierten Schwellwertes liegt, eine Hands-On-Erkennung erfolgt. Durch Erhöhen des Schwellwertes wird die Handerkennung hinsichtlich falsch positiver Meldungen robuster ausgestaltet.

In anderen Worten wird erkannt, dass der Fahrer seine Hände nicht am Lenkrad hat, was wiederum weitere Schritte, wie beispielsweise eine Animierung des Fahrers, bspw. durch akustische und/oder visuelle Signale, auslösen kann. Die Erhöhung des Schwellwertes trägt der fahrbahninduzierten Störung Rechnung. Insbesondere wird eine Erhöhung nur nach einer positiven Validierung der fahrbahninduzierten Störung mittels des Lenkwinkels durchgeführt. Insbesondere wird der zuvor definierte Schwellwert um mindestens 10 %, vorzugsweise um mindestens 20 % erhöht. Der Schwellwert hinsichtlich des ersten Signals wird somit basierend auf Informationen hinsichtlich einer fahrbahninduzierten Störung basierend auf dem zweiten Signal dynamisch angepasst.

Ferner kann beim Feststellen einer fahrbahninduzierten Störung die Handerkennung mittels des Handmomentsensors deaktiviert werden. Dies kann beispielsweise bedeuten, dass der Fahrer bestimmte Assistenzsysteme zum teilautonomen bzw. autonomen Fahren des Fahrzeuges nicht mehr nutzen kann. Erneut kann dies insbesondere erst dann erfolgen, wenn das Vorliegen einer fahrbahninduzierten Störung mittels des Lenkwinkels validiert wurde.

In einem weiteren Aspekt betrifft die Erfindung eine Vorrichtung zur Handerkennung an einem Lenkrad eines Fahrzeuges, die einen Handmomentsensor zur Ermittlung eines ersten Signals und mindestens einen Drehzahlsensor zur Ermittlung eines zweiten Signals hinsichtlich mindestens einer Radgeschwindigkeit umfasst, wobei die Vorrichtung vor allem zur Ausführung eines oben genannten Verfahrens ausgebildet ist. Insbesondere kann die Vorrichtung einen Drehzahlsensor für jedes Rad des Fahrzeuges aufweisen. Die Vorrichtung kann eine Auswerteeinheit zur Validierung des ersten Signals basierend auf dem zweiten Signal aufweisen. Erfindungsgemäß umfasst die Vorrichtung einen weiteren Sensor zum Bestimmen eines Lenkwinkels.

Es zeigen in rein schematischer Darstellung:
- Figur 1: einen Verfahrensablauf eines erfindungsgemäßen Verfahrens; und
- Figur 2: eine erfindungsgemäße Vorrichtung.

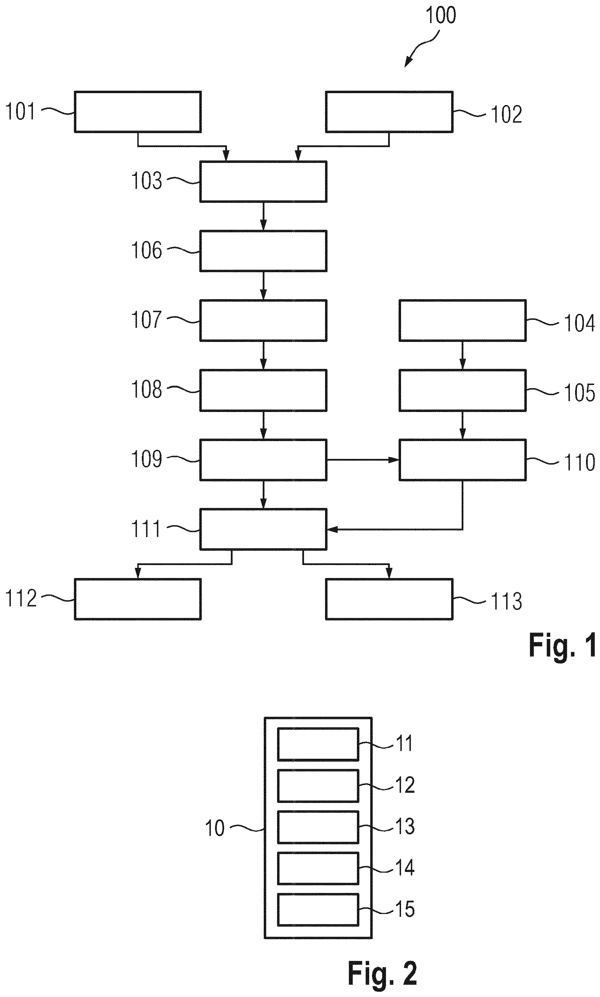

Figur 1 zeigt ein erfindungsgemäßes Verfahren 100 zur Handerkennung an einem Lenkrad eines Fahrzeuges, wobei das Verfahren 100 das Ermitteln 101 eines ersten Signals mittels eines Handmomentsensors umfasst. Das erste Signal dient zur Erkennung einer Hands-on- oder Hands-Off-Situation bezüglich eines Lenkrads, indem das Handmoment mittels eines Handmomentsensors ermittelt wird.

Ferner wird ein zweites Signal hinsichtlich einer Radgeschwindigkeit mittels eines Drehzahlsensors ermittelt 102. Das erste Signal und das zweite Signal werden kontinuierlich überwacht 103. Ferner kann ein Lenkwinkel ermittelt werden 104, insbesondere kann dieser kontinuierlich überwacht werden 105.

Mittels des zweiten Signals wird das erste Signal validiert 106. Dies geschieht insbesondere durch Analyse 107 des zweiten Signals hinsichtlich einer Amplitude und/oder einer Frequenz. Das zweite Signal wird mit einem zuvor definierten Schwellwert hinsichtlich der Amplitude und/oder der Frequenz verglichen 108. Insbesondere werden zuvor definierte Schwellwerte hinsichtlich der Amplitude in bestimmten Frequenzbereichen verglichen.

Beim Überschreiten 109 des Schwellwertes kann eine fahrbahninduzierte Störung festgestellt werden 111. Zuvor kann die fahrbahninduzierte Störung mittels des Lenkwinkels validiert werden 110, da dieser von der fahrbahninduzierten Störung in gleicher Art beeinflusst sein müsste. Wird eine fahrbahninduzierte Störung festgestellt 111, kann ein zuvor definierter Schwellwert bezüglich des ersten Signals zur Handerkennung erhöht werden 112. Ferner kann die Handerkennung mittels des Handmomentsensors deaktiviert werden 113.

In Figur 2 ist eine erfindungsgemäße Vorrichtung 10 gezeigt, die einen Handmomentsensor 11 zur Ermittlung des ersten Signals und einen Drehzahlsensor 12 zur Ermittlung des zweiten Signals aufweist. Ferner kann die Vorrichtung 10 einen Lenkwinkelsensor 13 aufweisen. Die Vorrichtung 10 weist eine Auswerteeinheit 14 auf, die zur Validierung des ersten Signals basierend auf dem zweiten Signal ausgebildet ist. Und zwar führt die Auswerteeinheit 14 die Analyse des zweiten Signals durch sowie beim Überschreiten eines Schwellwertes stellt die fahrbahninduzierte Störung fest und validiert diese zuvor mittels des Lenkwinkels. Eine Steuereinheit 15 kann dann beim Feststellen einer fahrbahninduzierten Störung Schritte ausführen wie beispielsweise das Erhöhen eines zuvor definierten Schwellwertes bezüglich des ersten Signals oder eine Deaktivierung der Handerkennung mittels des Handmomentsensors 11.

### Bezugszeichenliste

- 100: Verfahren
- 101: Ermitteln eines ersten Signals mittels eines Handmomentsensors
- 102: Ermitteln eines zweiten Signals hinsichtlich einer Radgeschwindigkeit mittels eines Drehzahlsensors
- 103: Überwachung des ersten und des zweiten Signals
- 104: Ermitteln eines Lenkwinkels
- 105: Überwachung des Lenkwinkels
- 106: Validierung der ersten Signals
- 107: Analyse des zweiten Signals hinsichtlich einer Amplitude und/oder einer Frequenz
- 108: Vergleich des zweiten Signals mit mindestens einem zuvor definierten Schwellwert
- 109: Überschreiten des Schwellwertes
- 110: Validierung mittels des Lenkwinkels
- 111: Feststellen einer fahrbahninduzierten Störung
- 112: Erhöhen eines zuvor definierten Schwellwertes bezüglich des ersten Signals
- 113: Deaktivieren der Handerkennung mittels des Handmomentsensors

- 10: Vorrichtung
- 11: Handmomentsensor
- 12: Drehzahlsensor
- 13: Lenkwinkelsensor
- 14: Auswerteeinheit
- 15: Steuereinheit

## Patentansprüche

1. Verfahren (100) zur Handerkennung an einem Lenkrad eines Fahrzeuges,
wobei mittels eines Handmomentsensors (11) ein erstes Signal zur Handerkennung ermittelt wird (101),
wobei mittels eines Drehzahlsensors (12) ein zweites Signal hinsichtlich einer Radgeschwindigkeit mindestens eines Rades des Fahrzeuges zur Validierung (106) der ersten Signals ermittelt wird (102),
wobei das zweite Signal mit mindestens einem zuvor definierten Schwellwert hinsichtlich der Amplitude und/oder der Frequenz verglichen wird (108) und beim Überschreiten (109) des zuvor definierten Schwellwertes ein Vorliegen einer fahrbahninduzierten Störung des ersten Signals festgestellt wird (111),
**dadurch gekennzeichnet, dass** ein Lenkwinkel des Fahrzeuges überwacht wird (105), wobei das Vorliegen der fahrbahninduzierten Störung durch eine Analyse des Lenkwinkels validiert wird (110).

2. Verfahren (100) nach Anspruch 1,
**dadurch gekennzeichnet, dass**
das erste Signal basierend auf dem zweiten Signal validiert wird (106).

3. Verfahren (100) nach Anspruch 1 oder 2,
**dadurch gekennzeichnet, dass**
das erste Signal und das zweite Signal kontinuierlich überwacht werden (103).

4. Verfahren (100) nach einem der vorangehenden Ansprüche,
**dadurch gekennzeichnet, dass**
das zweite Signal hinsichtlich einer Amplitude und/oder Frequenz analysiert wird (107).

5. Verfahren (100) nach einem der Ansprüche 1 bis 4,
**dadurch gekennzeichnet, dass**
beim Feststellen des Vorliegens einer fahrbahninduzierten Störung ein zuvor definierter Schwellwert bezüglich des ersten Signals zur Erkennung einer Hands off Situation erhöht wird (112).

6. Verfahren (100) nach einem der Ansprüche 1 bis 5,
**dadurch gekennzeichnet, dass**
beim Feststellen des Vorliegens einer fahrbahninduzierten Störung die Handerkennung mittels des Handmomentsensor deaktiviert wird (113).

7. Vorrichtung (10) zur Handerkennung an einem Lenkrad eines Fahrzeugs mit einem Handmomentsensor (11) zur Ermittlung eines erstes Signals,
wobei
die Vorrichtung (10) einen Drehzahlsensor (12) zur Ermittlung eines zweiten Signals hinsichtlich einer Radgeschwindigkeit mindestens eines Rades des Fahrzeuges zur Validierung der ersten Signals aufweist,
wobei die Vorrichtung eine Auswerteeinheit (14) aufweist, die eingerichtet ist, das zweite Signal mit mindestens einem zuvor definierten Schwellwert hinsichtlich der Amplitude und/oder der Frequenz zu vergleichen (108) und beim Überschreiten (109) des zuvor definierten Schwellwertes ein Vorliegen einer fahrbahninduzierten Störung des ersten Signals festzustellen (111),
**dadurch gekennzeichnet dass** die Vorrichtung (10) einen Lenkwinkelsensor (13) zur Ermittlung eines Lenkwinkels aufweist und die Auswerteeinheit (14) weiterhin eingerichtet ist, die fahrbahninduzierte Störung mittels des Lenkwinkels zu validieren.

## Claims

1. Method (100) for detecting a hand on a steering wheel of a vehicle,
a first signal for detecting a hand being determined (101) by means of a hand torque sensor (11),
a second signal with regard to a wheel speed of at least one wheel of the vehicle being determined (102) by means of a speed sensor (12) for validating (106) the first signal,
the second signal being compared (108) with at least one previously defined threshold with regard to amplitude and/or frequency and, when the previously defined threshold is exceeded (109), the presence of a road-induced disturbance of the first signal being ascertained (111),
**characterized in that** a steering angle of the vehicle is monitored (105), the presence of the road-induced disturbance being validated (110) by an analysis of the steering angle.

2. Method (100) according to claim 1,
**characterized in that**
the first signal is validated (106) on the basis of the second signal.

3. Method (100) according to claim 1 or claim 2,
**characterized in that**
the first signal and the second signal are continuously monitored (103).

4. Method (100) according to any of the preceding claims,
**characterized in that**
the second signal is analyzed (107) with regard to amplitude and/or frequency.

5. Method (100) according to any of claims 1 to 4,
**characterized in that**
when the presence of a road-induced disturbance is ascertained, a previously defined threshold relating to the first signal for detecting a hands-off situation is increased (112).

6. Method (100) according to any of claims 1 to 5,
**characterized in that**
when the presence of a road-induced disturbance is ascertained, hand detection is deactivated (113) by means of the hand torque sensor.

7. Device (10) for detecting a hand on a steering wheel of a vehicle with a hand torque sensor (11) for determining a first signal,
the device (10) having a speed sensor (12) for determining a second signal with regard to a wheel speed of at least one wheel of the vehicle for validating the first signal,
the device having an evaluation unit (14) which is configured to compare (108) the second signal with at least one previously defined threshold with regard to amplitude and/or frequency and, when the previously defined threshold is exceeded (109), to ascertain (111) the presence of a road-induced disturbance of the first signal,
**characterized in that** the device (10) has a steering angle sensor (13) for determining a steering angle and the evaluation unit (14) is further configured to validate the road-induced disturbance by means of the steering angle.

## Revendications

1. Procédé (100) pour la reconnaissance des mains sur un volant de direction d'un véhicule,
dans lequel un premier signal pour la reconnaissance des mains est déterminé (101) au moyen d'un capteur de couple manuel (11),
dans lequel
un second signal concernant une vitesse de roue d'au moins une roue du véhicule est déterminé (102) au moyen d'un capteur de vitesse de rotation (12) pour la validation (106) du premier signal,
dans lequel le second signal est comparé (108) à au moins une valeur seuil définie au préalable concernant l'amplitude et/ou la fréquence et, en cas de dépassement (109) de la valeur seuil définie au préalable, une présence d'une perturbation induite par la chaussée du premier signal est constatée (111),
**caractérisé en ce qu'un** angle de braquage du véhicule est surveillé (105), dans lequel la présence de la perturbation induite par la chaussée est validée (110) par une analyse de l'angle de braquage.

2. Procédé (100) selon la revendication 1,
**caractérisé en ce que**
le premier signal est validé (106) sur la base du second signal.

3. Procédé (100) selon la revendication 1 ou 2,
**caractérisé en ce que**
le premier signal et le second signal sont surveillés (103) en permanence.

4. Procédé (100) selon l'une des revendications précédentes,
**caractérisé en ce que**
le second signal est analysé (107) concernant une amplitude et/ou une fréquence.

5. Procédé (100) selon l'une des revendications 1 à 4,
**caractérisé en ce que**
lors de la constatation de la présence d'une perturbation induite par la chaussée, une valeur seuil définie au préalable est augmentée (112) par rapport au premier signal de la reconnaissance d'une situation de mains levées.

6. Procédé (100) selon l'une des revendications 1 à 5,
**caractérisé en ce que**
lors de la constatation de la présence d'une perturbation induite par la chaussée, la reconnaissance des mains est désactivée (113) au moyen du capteur de couple manuel.

7. Dispositif (10) pour la reconnaissance des mains sur un volant de direction d'un véhicule comportant un capteur de couple manuel (11) pour la détermination d'un premier signal,
dans lequel
le dispositif (10) présente un capteur de vitesse de rotation (12) pour la détermination d'un second signal concernant une vitesse de roue d'au moins une roue du véhicule pour la validation du premier signal,
dans lequel le dispositif présente une unité d'évaluation (14) qui est configurée pour comparer (108) le second signal à au moins une valeur seuil définie au préalable concernant l'amplitude et/ou la fréquence et pour constater (111), en cas de dépassement (109) de la valeur seuil définie au préalable, une présence d'une perturbation induite par la chaussée du premier signal,
**caractérisé en ce que** le dispositif (10) présente un capteur d'angle de braquage (13) pour la détermination d'un angle de braquage et l'unité d'évaluation (14) est en outre configurée pour valider la perturbation induite par la chaussée au moyen de l'angle de braquage.
